(19) Europäisches Patentamt / European Patent Office / Office européen des brevets

(11) **EP 2 895 914 B1**

(12) **FASCICULE DE BREVET EUROPEEN**

(45) Date de publication et mention
de la délivrance du brevet:
**02.06.2021 Bulletin 2021/22**

(21) Numéro de dépôt: **13792752.1**

(22) Date de dépôt: **12.09.2013**

(51) Int Cl.:
*G02B 30/27* (2020.01)       *H04N 13/302* (2018.01)
*H04N 13/324* (2018.01)

(86) Numéro de dépôt international:
**PCT/IB2013/058496**

(87) Numéro de publication internationale:
**WO 2014/041504 (20.03.2014 Gazette 2014/12)**

(54) **ECRAN D'AFFICHAGE POUR AUTOSTEREOSCOPIE**

ANZEIGEBILDSCHIRM FÜR AUTOSTEREOSKOPIE

DISPLAY SCREEN FOR AUTOSTEREOSCOPY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.09.2012 FR 1258657**

(43) Date de publication de la demande:
**22.07.2015 Bulletin 2015/30**

(73) Titulaire: **Alioscopy**
**75020 Paris (FR)**

(72) Inventeur: **ALLIO, Pierre**
**75020 Paris (FR)**

(74) Mandataire: **Bringer, Mathieu**
**BRINGER IP
1 Place du Président Thomas Wilson
31000 Toulouse (FR)**

(56) Documents cités:
**WO-A1-2009/057020      WO-A1-2010/019923
CN-A- 101 511 035        US-A1- 2006 176 245
US-A1- 2008 316 379      US-A1- 2011 141 560**

**Description**

L'invention porte sur un écran d'affichage, et notamment sur un écran p!at de téléviseur, d'ordinateur ou semblable, permettant d'obtenir, à résolution égale, une meilleure qualité apparente des images qu'un écran conventionnel. Un écran selon l'invention convient tout particulièrement à l'affichage autostéréoscopique, notamment au moyen de la technique décrite dans le document EP1779181 de la demanderesse. Cependant, son utilisation s'avère avantageuse même dans les applications non autostéréoscopiques.

L'invention peut s'appliquer à des écrans de types différents, pour autant qu'ils comportent une matrice de pixels composés par des sous- pixels de couleurs différentes. On peut mentionner à titre d'exemple les écrans à cristaux liquides (LCD), plasma, à diodes électroluminescentes organiques (OLED), etc.

Les écrans d'affichage, et notamment les écrans plats, conventionnels sont constitués par une surface lumineuse, rectangulaire subdivisée en colonnes verticales et en lignes horizontales. Ces colonnes et lignes sont constituées de pixels, eux même formés de sous-pixels de trois couleurs différentes, généralement rouge, vert et bleu (« écran RVB »). Certains écrans utilisent un nombre N de sous-pixels - et donc de couleurs - par pixel plus élevé, par exemple quatre : rouge, vert, bleu et jaune, ou rouge vert, bleu et blanc.

Les sous-pixels sont en général formés de petits rectangles colorés, ou de structures plus complexes qui s'inscrivent le plus souvent dans un rectangle, présentant une hauteur environ N fois plus élevée que leur largeur de manière à former des pixels carrés ou, plus généralement, agencés selon une grille à mailles carrées.

Le principe généralement mis en œuvre consiste à juxtaposer horizontalement des colonnes de sous-pixels d'une même couleur s'étendant sur toute la hauteur de l'écran. Ainsi, considérés dans l'axe vertical des colonnes, les petits cotés des rectangles représentant des sous-pixels d'une même couleur sont adjacents d'une ligne à l'autre ; ils peuvent être directement jointifs ou être séparés par une ligne noire pour augmenter le contraste de l'image. De même, selon l'axe horizontal, les grands cotés des rectangles sont entourés par des rectangles de couleurs différentes et complémentaires, et peuvent également être séparés par une ligne noire pour augmenter le contraste de l'image.

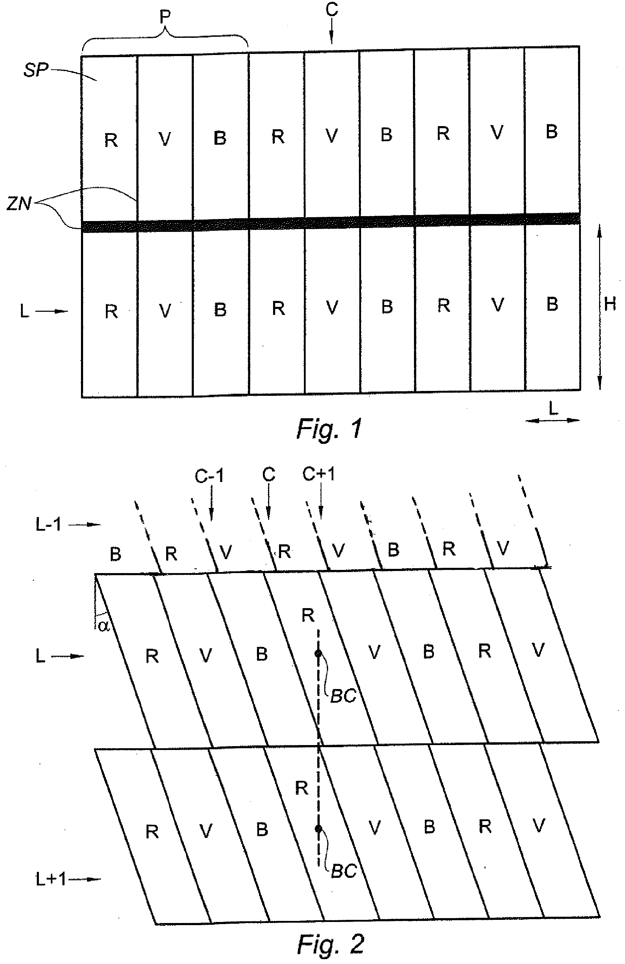

Une telle structure conventionnelle est illustrée sur la figure 1 , où la référence P indique un pixel, SP indique un sous-pixel, C une colonne, L une ligne, ZN une zone noire séparant deux sous-pixels et R, V et B correspondent aux couleurs rouge, verte et bleu des sous-pixels.

La figure 1 se rapporte au cas le plus simple, où les sous-pixels sont rectangulaires. En fait, dans les écrans du commerce on peut observer des sous-pixels présentant des géométries complexes et des subdivisions (chevrons, doubles chevrons, combinaisons de carrés et rectangles, etc.) développées pour améliorer l'homogénéité de luminosité et de contraste, l'angle d'observation et d'une manière générale la qualité apparente de l'image affichée - c'est-à-dire la qualité effectivement perçue par un observateur. En effet, et notamment pour les technologies utilisant Ses cristaux liquides, il est nécessaire de subdiviser le sous-pixel en entités plus petites, parfois adressables spécifiquement, chacune ayant un rendement lumineux directionnel différent. Même lorsque les sous-pixels présentent une forme qui ne peut pas être inscrite dans un rectangle (comme dans le cas de l'écran Samsung LTI460HM03, où ils ont une géométrie en double chevron et s'imbriquent l'un dans l'autre), chaque sous-pixel d'une ligne « L » est contigu en haut et en bas à des sous-pixels de même couleur des lignes « L-1 » et « L+1 ».

Cette structure conventionnelle induit des artefacts, surtout lorsque l'écran est observé à une faible distance : les interlignes (espaces noirs entre les lignes) peuvent devenir visibles, des franges colorées peuvent apparaître, etc. En outre, lorsqu'un tel écran est utilisé avec un réseau de sélection angulaire tel qu'un réseau de lenticules cylindriques pour réaliser un affichage autostéréoscopique, comme expliqué dans le document EP1779181 , d'autres artefacts tels que des moirés sont susceptibles d'apparaître.

Les documents US2011/141560 et US2008/0316379 décrivent chacun un écran autostéréoscopique comprenant une matrice de sous-pixels inclinés par rapport à la verticale pour améliorer le pouvoir séparateur de l'écran. Dans le document US2008/0316379, les sous-pixels sont en outre alignés selon la direction de l'angle du réseau lenticulaires.

Le document WO2009/057020 décrit un écran autostéréoscopique comprenant une matrice de pixels surmonté d'un masque de régions opaques visant à former des zones d'affichage distinctes des sous-pixels de l'écran pour améliorer le pouvoir séparateur de l'écran.

L'invention vise à surmonter ces inconvénients de l'art antérieur. Conformément à l'invention, un tel objectif est atteint en modifiant la structure de l'écran de telle façon que les sous-pixels, de forme allongée, soient inclinés par rapport à la verticale et que les extrémités courtes supérieure et inférieure de chaque sous-pixel d'une ligne L, à l'exception de ceux de la première et de la dernière ligne, se trouvent en regard respectivement des extrémités inférieure et supérieure de sous-pixels appartenant respectivement aux lignes L-1 et L+1 et présentant des couleurs différentes, avec un décalage selon la direction des extrémités courtes des sous-pixels entre les extrémités courtes situées en regard les unes des autres des sous-pixels de couleurs différentes. Ainsi, l'écran n'apparait plus constitué par des colonnes de sous-pixels d'une même couleur séparées par des lignes noires verticales et continues. Cela conduit à une disparition, ou au moins à une atténuation, des artefacts mentionnés plus haut, car le système visuel humain est plus sensible aux structures ayant une orientation verticale ou horizontale qu'à celles obliques.

Ainsi, un objet de l'invention est un écran d'affichage comprenant une matrice de pixels agencés par lignes et par colonnes perpendiculaires auxdites lignes, chaque pixel comprenant trois ou plus sous-pixels de couleurs différentes alignés dans la direction desdites lignes et présentant une forme allongée, chaque dit sous-pixel présente une dimension principale formant un angle $\alpha$ non nul (et de préférence compris entre 5° et 20° environ) par rapport à la direction desdites colonnes.

En outre, les extrémités courtes supérieure et inférieure de chaque sous-pixel d'une ligne L, à l'exception de ceux de la première et de la dernière ligne, se trouvent en regard respectivement des extrémités inférieure et supérieure de sous-pixels appartenant respectivement aux lignes L-1 et L+1 et présentant des couleurs différentes, avec un décalage selon la direction des extrémités courtes des sous-pixels entre les extrémités courtes situées en regard les unes des autres des sous-pixels de couleurs différentes.

Chaque dit sous-pixel peut être entouré par quatre sous-pixels, deux dans la direction de ladite dimension principale et deux dans une direction perpendiculaire, ayant des couleurs différentes de celle dudit sous-pixel. Cela contribue à l'amélioration de la qualité apparente des images, en augmentant leur homogénéité.

Selon un premier mode de réalisation de l'invention, chaque dit sous-pixel s'inscrit à l'intérieur d'un parallélogramme (autre qu'un rectangle) dont les côtés plus courts sont orientés dans la direction desdites lignes.

Selon un deuxième mode de réalisation de l'invention, chaque dit sous-pixel s'inscrit à l'intérieur d'un rectangle dont les côtés plus courts forment un angle a par rapport à la direction desdites lignes. Ainsi, au lieu de former des droites horizontaies, les interlignes sont formées par des segments obliques, et donc moins visibles.

Selon cette variante, les barycentres des sous-pixels d'une même couleur appartenant à des lignes différentes peuvent être alignés dans la direction desdites colonnes, de telle sorte qu'il n'y a pas de translation des sous-pixels par rapport à un écran selon l'art antérieur.

Comme dans les écrans connus de l'art antérieur, les différents sous-pixels peuvent être séparés par des espaces noirs.

Ledit angle $\alpha$ peut être donné par l'équation $\alpha=(1+\varepsilon).tan^{-1}(1/N)$, où $\varepsilon$ est un paramètre compris entre -0, 1 et +0,1 et N est le nombre de sous-pixels compris dans chaque pixel.

Un tel écran d'affichage est en outre équipé d'un réseau de sélection angulaire ou sélecteur optique (réseau lenticulaire, barrière de parallaxe, etc.) pour affichage autostéréoscopique dont les axes principaux forment un angle a par rapport à la direction desdites colonnes et dont le pas permet de couvrir M≥2 sous-pixels.

Un tel écran d'affichage peut en particulier être de type plat. D'autres caractéristiques, détails et avantages de l'invention ressortiront à la lecture de la description faite en référence aux dessins annexés donnés à titre d'exemple, dans lesquels:

- la figure 2 montre la structure d'un écran selon un premier mode de réalisation de l'invention, caractérisé par des sous-pixels qui s'inscrivent dans une enveloppe en forme de parallélogramme présentant des côtés longs obliques et des côtés courts horizontaux ;
- la figure 3a montre la structure d'un écran RVB selon un premier mode de réalisation de l'invention, caractérisé par des sous-pixels qui s'inscrivent dans une enveloppe en forme de rectangle présentant quatre côtés obliques ;
- la figure 3b montre une variante d'un tel écran ;
- les figures 4a à 4e ne font pas parties de l'invention et illustrent d'autres solutions pour améliorer les écrans autostéréoscopiques, présentant des espaces séparateurs noirs entre colonnes de sous-pixels présentant une largeur approximativement égale à celle desdites colonnes ;
- les figures 5a, 5b et 5c correspondent aux figures 4a, 4b et 4c, sauf en ce qu'elles concernent des écrans à quatre couleurs et ne font pas parties de l'invention ;
- la figure 6 montre un écran selon l'invention, équipé d'un réseau de sélection angulaire pour autostéréoscopie ;
- les figures 7a - 7e illustrent des exemples d'écrans connus de l'art antérieur présentant des sous-pixels de forme complexe.

La figure 2 montre la structure d'un écran à trois couleurs, de type RVB, obtenu à partir de l'écran de la figure 1 en déformant chaque sous-pixel pour lui donner une forme en parallélogramme. Les côtés courts supérieurs et inférieurs de chaque sous-pixel sont déplacés, respectivement, vers la gauche et vers la droite, et les côtés longs sont inclinés d'un angle a - qui vaut ici 8°43 (en notation décimale, c'est à dire 18 degrés et 43 centièmes de degré) - par rapport à la verticale. Dans le cas particulier de la figure 2, le déplacement relatif des côtés courts est sensiblement égal à la largeur d'un sous-pixel. Ainsi, le côté court en haut du sous-pixel (bleu) de la ligne « L » et de la colonne « C » se trouve en regard du côté court d'en bas du sous-pixel (vert) de la ligne « L-1 » et de la colonne « C-1 ». De même, le côté court en bas du sous-pixel de la ligne « L » et de la colonne «

C » se trouve en regard du côté court d'en haut du sous-pixel (rouge) de la ligne « L+1 » et de la colonne « C+1 ». La géométrie symétrique peut également être adoptée.

De cette façon, les lignes noires séparant verticalement les sous-pixels deviennent des lignes brisées constituées de petits segments formant un angle de 18°43 environ avec la verticale.

On remarquera que les sous-pixels semblent former des colonnes inclinées de 18°43 environ par rapport à la verticale, changeant de couleur à chaque changement de ligne en permutation circulaire sur toute la hauteur de l'écran. Néanmoins, si l'on considère les barycentres BC des sous-pixels d'une même couleur (par exemple rouge), on peut considérer qu'ils demeurent alignés selon un axe vertical, comme dans le cas de la figure 1 . La valeur idéale de l'angle $\alpha$ est donnée par l'équatio suivante $\alpha=tan^{-1}(1/N)$, où N est le nombre de sous-pixels par pixel ou, de manière approximativement équivalente - tant que la largeur des lignes noires séparant tes sous-pixels verticaiement et horizontalement n'est pas trop importante - le rapport hauteur H / largeur L des sous-pixels (à noter que les valeurs H et L peuvent être difficiles à définir pour des sous-pixels de forme complexe). Plus généralement, on peut admettre un écart de l'ordre de 10% par rapport à cette valeur idéale, ce qui donne $\alpha=(1+\varepsilon).tan^{-1}(1/N)$, avec $\varepsilon$ compris entre -0,1 et 0,1 .

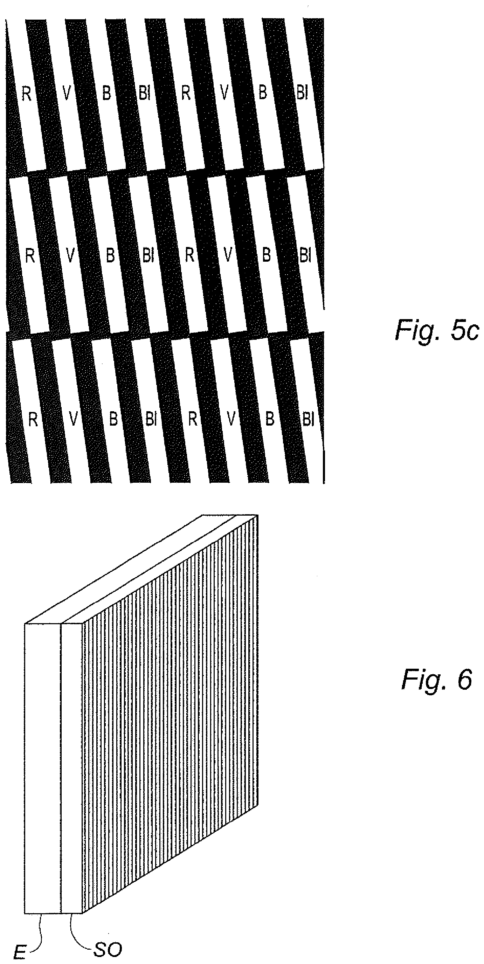

L'utilité de ce système est double. D'une part, il s'agit de briser l'aspect vertical et continu des espaces inter sous-pixels, qui peut être visible de près. D'autre part, il s'agit d'optimiser l'écran pour les applications autostéréoscopiques, en améliorant très significatîvement le pouvoir séparateur des sélecteurs optiques utilisés (réseaux lenticulaires, barrière de parallaxe etc.). On remarquera à ce propos que l'angle $\alpha$ correspond exactement à l'inclinaison optimale des axes principaux d'un réseau de sélection angulaire pour affichage autostéréoscopique, tel que défini par le document EP1779181 précité. La figure 6 montre, de manière schématique, un écran E selon l'invention équipé d'un sélecteur optique (réseau lenticulaire) SO. D'une manière connue en soi, le pas de ce réseau permet de couvrir un nombre M≥2 de sous-pixeis égal au nombre de points de vue affichés sur l'écran.

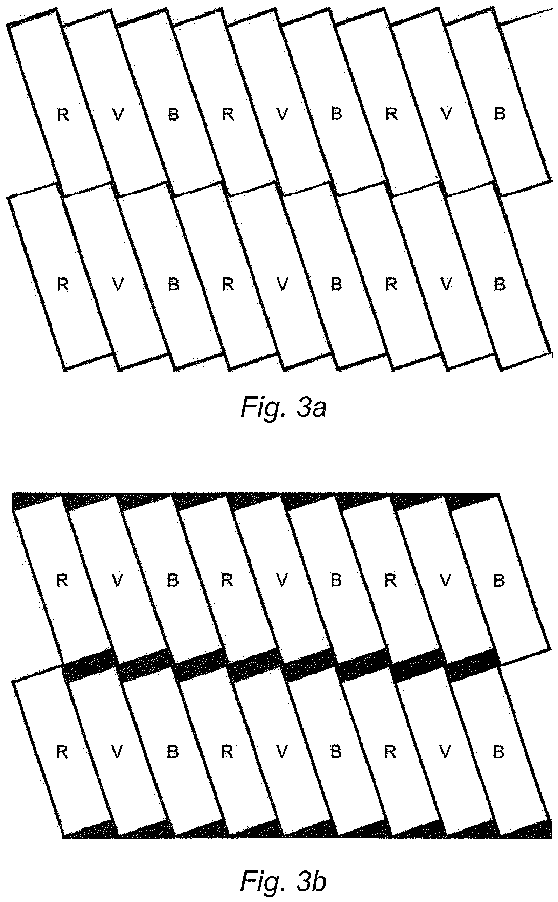

La figure 3a illustre un deuxième mode de réalisation de l'invention, obtenu en appliquant aux côtés courts des sous-pixels une rotation équivalente à celle pratiquées pour les côtés longs, de $\alpha$=18°43 environ, afin de reconstituer des rectangles et de briser l'alignement horizontal des espaces noires séparant les lignes. Ainsi, sans changer la position initiale du barycentre de chaque sous-pixeî, mais en appliquant une rotation de 18°43 environ, on brise tes alignements verticaux et horizontaux des espaces noirs séparant les sous-pixels, ce qui est normalement favorable à la disparition des effets de structures visibles de près dans les images, surtout depuis la quasi disparition des dépolis en face avant des écrans et malgré l'augmentation incessante des résolutions. La compatibilité des écrans ainsi transformés avec les techniques de l'autostéréoscopie est également améliorée. La structure illustrée sur la figure 3b est très semblable, mais se caractérise par une interligne plus large.

En regardant attentivement les figures 2 et 3a/b on peut noter qu'il existe un léger décalage selon la direction des côtés courts entre les côtés courts, situés en regard les uns des autres, des sous-pixels de couleurs différentes alignés selon l'axe oblique de 18°43 environ. Ce décalage correspond en fait à la largeur de la ligne noire parallèle au côté long des sous-pixels (espaces noirs séparant les colonnes). Ainsi, ces lignes noires sont brisées et ne sont plus perceptibles lors de l'utilisation de ces écrans en auto stéréoscopie malgré la perte de 50% de luminosité encore existante au changement de point de vue à l'observation, ce qui correspond au changement de sous-pixel vu au travers du sélecteur optique. Cette variation de luminosité est constante quelle que soit la largeur de ces lignes noires, mais elle n'est visible que pendant une toute petite partie de l'angle solide sous lequel on observe chacun des points de vue. Plus la ligne noire est fine, moins longtemps cette perte de luminosité sera perceptible.

Des nouvelles technologies d'écran, notamment celle des diodes électroluminescentes organiques (OLED) permettent de supprimer les espaces noirs entre sous-pixels. Un écran de ce type convient très bien à l'autostéréoscopie, ne présentant plus aucun moiré au changement de point de vue.

D'autres écrans, au contraire, présentent des espaces noirs entre sous-pixels très larges, parce que la luminosité des sous-pixels le permet et que le contraste et la saturation des couleurs en sont améliorés.

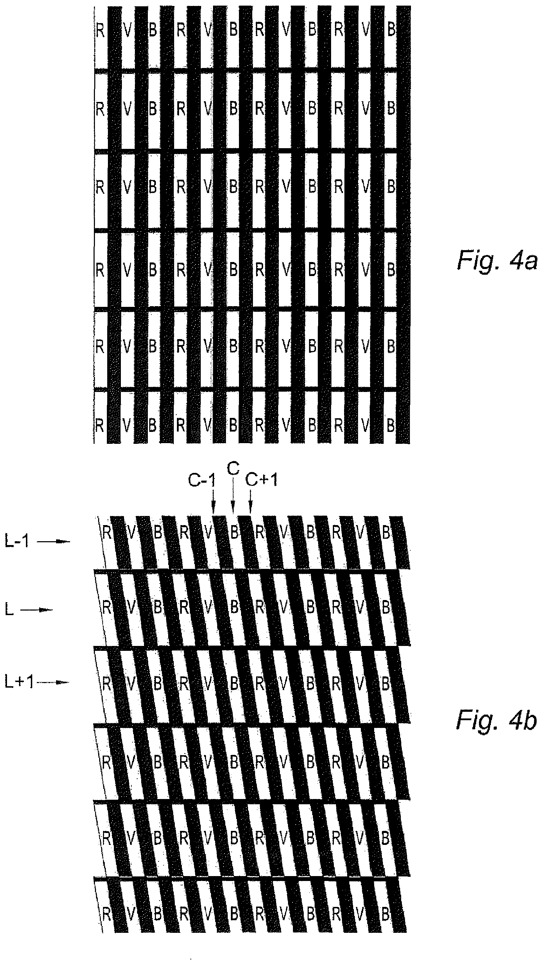

La figure 4a illustre le cas d'un écran, ne relevant pas de l'invention, dans lequel les colonnes de sous-pixels sont séparées par des lignes noires verticales aussi larges qu'un sous-pixel. L'écran présente donc une succession de lignes verticales éclairées et de lignes verticales noires de même largeur. Même si on reste dans un système à trois couleurs primaires (RVB), le rapport largeur/hauteur de chaque sous-pixel (considéré rectangulaire) n'est plus de 1 à 3, mais de 1 à 6.

On peut considérer que les lignes noires verticales sont en fait des colonnes de sous-pixels toujours éteintes : tout se passe comme si l'écran était en fait à 6 couleurs (N=6), mais avec l'impossibiiité d'allumer 1 sous-pixel sur deux.

Dans ce nouveau système l'angle formé par la diagonale d'un sous-pixel est de 9°2 au lieu de 18°43.

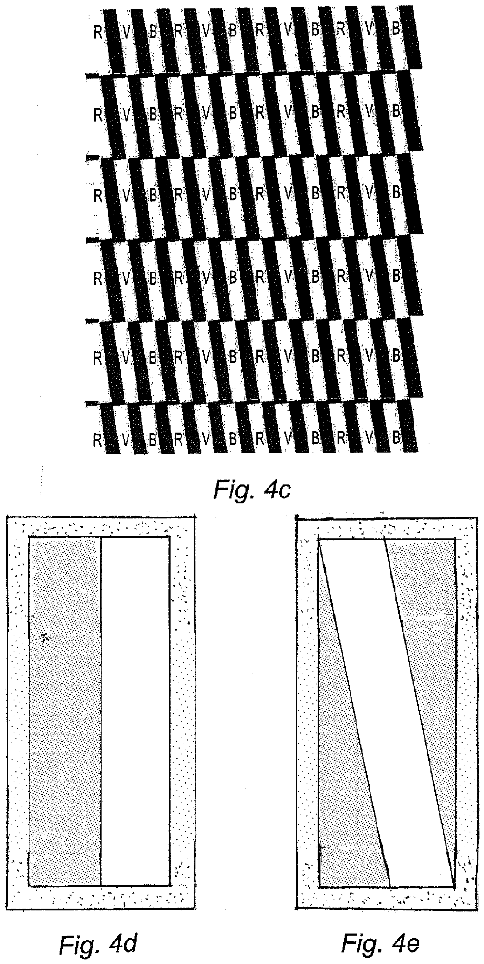

Les sous-pixels peuvent être déformés en parallélogrammes avec des côtés longs inclinés de 9°2 par rapport à la verticale (figure 4b), ou garder leur forme ou enveloppe rectangulaire et être simplement tournés de 9°2 (figure 4c), comme expliqué plus haut. Dans les deux cas, on aboutit à une structure dans laquelle le côté court en bas du sous-pixel de la ligne L et de la colonne C se retrouve au dessus du côté court en haut du « sous-pixel » noir de la ligne L+1 et de la colonne C+1 , et le côté court en haut du sous-pixel de la ligne L et de la colonne C se retrouve en dessous du côté court en bas du « sous-pixel » noir de la ligne L-1 et de la colonne C-1.

Ainsi chaque sous-pixel se trouve entouré de quatre zones noires ayant la même forme, ce qui en améliore le contraste et la saturation. L'écran présente donc une structure en damier avec un axe (figure 4b), voire les deux (figures 4c), incliné de $\alpha=9°2$ environ par rapport à la verticale. On remarquera que, comme dans le cas des figures 2 et 3a/b, les barycentres des sous-pixels d'une même couleur demeurent alignés dans une direction verticale.

Il convient de souligner que dans ce cas, on a $\alpha=0.5(1+\varepsilon).tan^{-1}(1/N)$, où, comme expliqué plus haut, le paramètre $\varepsilon$ autorise un écart par rapport à la valeur idéale.

Cette structure est particulièrement bien adaptée à l'autostéréoscopie. En effet, si on positionne un sélecteur optique à sa distance d'utilisation optimale (la distance focale, pour un réseau lenticulaire) sur la surface d'un tel écran, on peut doubler te nombre de point de vue sans modifier le pas du sélecteur, simplement en affichant les points de vue impaires sur les lignes impaires et les points de vue paires sur les lignes paires (ou inversement). La structure en damiers garantit une luminosité constante quelle que soit la position de l'observateur et quel que soit le point de vue observé au travers du sélecteur optique. Les transitions sont franches et très rapides et aucun moiré ne peut apparaître. Un autre avantage, par rapport aux écrans des figures 2 et 3a/b est que l'angle formés par les axes du sélecteur optique avec la verticale (toujours égal à a) est désormais de 9°2 au lieu de 18°43 ce qui améliore la cohérence entre le haut et le bas de l'écran.

Un écran du type illustré sur la figure 4a peut être obtenu à partir d'un écran présentant des sous-pixels contigus ou quasi contigus, simplement en déposant un revêtement opaque sur des portions de sa surface. Ce dépôt peut se faire au moyen d'un masque présentant un motif élémentaire du type illustré sur la figure 4d. Pour obtenir un écran conformément à la figure 4b, il suffit de modifier ce motif élémentaire comme illustré sur la figure 4e. On peut procéder d'une façon analogue pour obtenir un écran du type de la figure 4c.

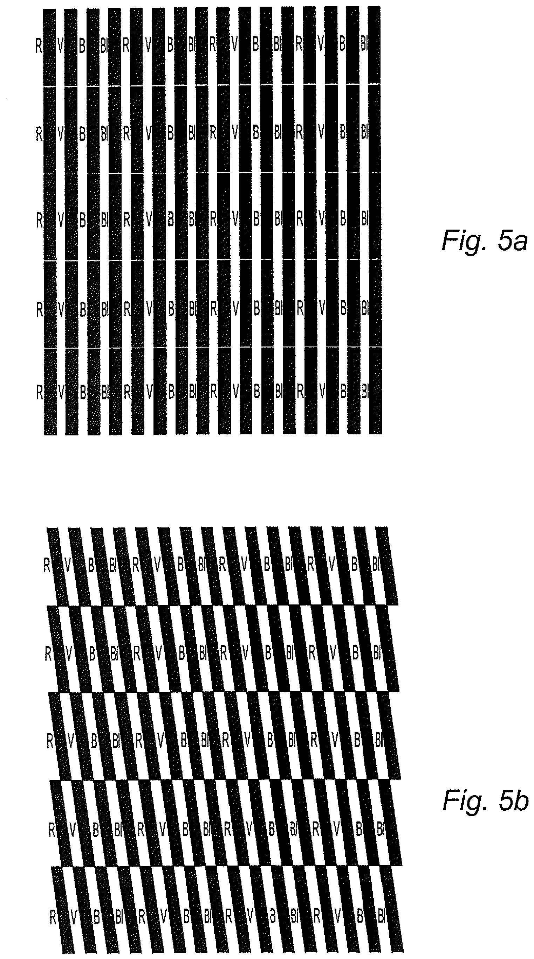

Comme mentionné plus haut, certains écrans utilisent plus de trois couleurs - par exemple N=4 avec des sous-pixels rouges (R), verts (V), bleus (B) et blancs (Bl) ; c'est par exemple le cas des écrans OLED de la société LG. L'invention s'applique également à ce cas de figure, simplement la valeur de l'angle $\alpha$ diminue (pour N=4 : $\alpha=14°$ avec des lignes noires fines, $\alpha=7°$ avec des lignes noires de même largeur que les sous-pixels). Les figures 5a, 5b et 5c montrent des écrans semblables à ceux des figures 4a, 4b et 4c, respectivement, mais avec N=4.

L'invention admet plusieurs variantes.

En effet, elle s'applique à tout type d'écran, et notamment d'écran plat, quelle que soit la technologie mise en oeuvre, à la seule condition que ses sous-pixels soient alignés dans la direction des lignes.

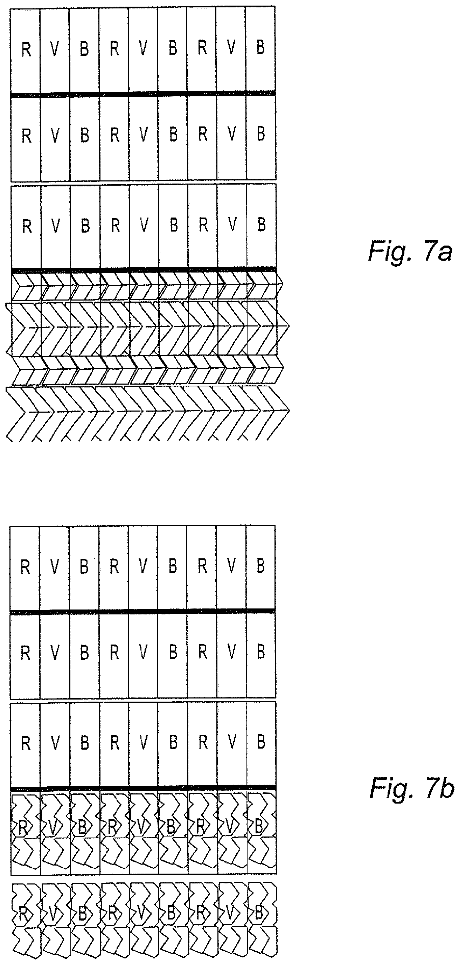

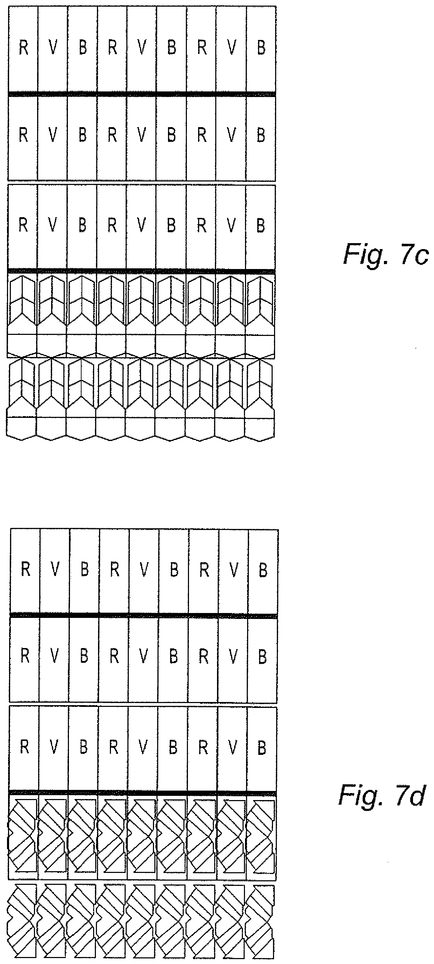

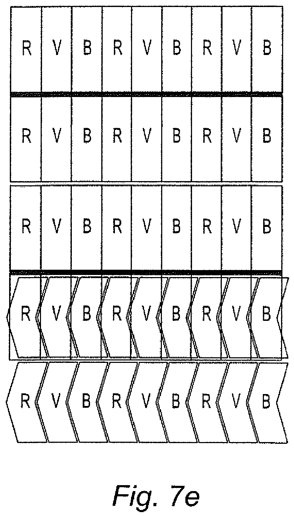

Les sous-pixels peuvent être directement jointifs ou être séparés par des espaces noirs plus ou moins larges - à la limite, plus larges que les sous-pixels eux-mêmes ; ils peuvent présenter une forme simple (rectangle, parallélogramme) ou complexe (chevron...), et même être imbriqués entre eux. Les figures 7a - 7e illustrent des exemples d'écrans connus de l'art antérieur présentant des sous-pixels de forme complexe auxquels sont superposées des grilles d'enveloppes rectangulaires. Ces écrans peuvent être convertis en écrans selon l'invention simplement en tournant ces enveloppes rectangulaires ou en les déformant en parallélogrammes, comme discuté plus haut en référence aux figures 1 à 3b.

L'angle $\alpha$ peut s'écarter des valeurs données par les équations reportées plus haut, mais sera généralement compris entre 5° et 20° environ.

L'invention permet d'améliorer la qualité d'affichage quelle que soit la résolution de l'écran, et cela aussi bien en affichage « normal » qu'en autostéréoscopie, voire en stéréoscopie avec lunettes.

Dans la figure 4d, une bordure grisée entoure un ensemble, formé par un pixel en blanc et une zone sombre de forme rectangulaire chacun, l'ensemble étant inscrit dans un rectangle. Dans la figure 4e, une bordure grisée entoure un ensemble, formé par un pixel en blanc en forme de losange et deux zones sombres en forme de triangle rectangle chacune, l'ensemble étant inscrit dans un rectangle. Les bordures des figures 4d et 4e ne sont pas des éléments de la matrice de pixels et ne servent ici qu'à titre illustratif à faire ressortir le motif du pixel.

**Revendications**

1. Écran d'affichage (E) comprenant une matrice de pixels (P) agencés par lignes et par colonnes perpendiculaires auxdites lignes, chaque pixel comprenant trois ou plus sous-pixels (SP) de couleurs différentes (R, V, B) alignés dans la direction desdites lignes et présentant une forme allongée, chaque dit sous-pixel présentant une dimension principale for-mant un même angle $\alpha$ non nul par rapport à la direction desdites colonnes, les extrémités courtes supérieure et inférieure de chaque sous-pixel d'une ligne L, à l'exception de ceux de la première et de la dernière ligne, étant en regard respectivement des extrémités inférieure et supérieure de sous-pixels appartenant respectivement aux lignes L-1 et L+1 et présentant des couleurs différentes, avec un décalage selon la direction des extrémités courtes des sous-pixels entre les extrémités courtes situées en regard les unes des autres des sous-pixels de couleurs différentes, l'écran étant en outre équipé d'un réseau de sélection angulaire pour affichage autostéréoscopique dont les axes principaux forment un angle $\alpha$ par rapport à la direction desdites colonnes et dont le pas permet de couvrir $M \geq 2$ sous-pixels égal au nombre de points de vue affichés sur l'écran.

2. Écran d'affichage selon la revendication 1, **caractérisé en ce que** chaque dit sous-pixel est entouré par quatre sous- pixels, deux dans la direction de ladite dimension principale et deux dans une direction perpendiculaire, ayant des couleurs différentes de celle dudit sous-pixel.

3. Écran d'affichage selon l'une des revendications précédentes, dans lequel chaque dit sous-pixel s'inscrit à l'intérieur d'un parallélogramme dont les côtés plus courts sont orientés dans la direction desdites lignes.

4. Écran d'affichage selon l'une des revendications 1 à 2, dans lequel chaque dit sous-pixel s'inscrit à l'intérieur d'un rectangle dont les côtés plus courts forment un angle $\alpha$ par rapport à la direction desdites lignes.

5. Écran d'affichage selon la revendication précédente, dans lequel les barycentres (BC) des sous-pixels d'une même couleur appartenant à des lignes différentes sont alignés dans la direction desdites colonnes.

6. Écran d'affichage selon l'une des revendications précédentes, dans lequel les différents sous-pixels sont séparés par des espaces noirs.

7. Écran d'affichage selon l'une des revendications précédentes, dans lequel ledit angle $\alpha$ est donné par l'équation $\alpha=(1+\varepsilon).tan^{-1}(1/N)$, où $\varepsilon$ est un paramètre compris entre -0,1 et +0,1 et N est le nombre de sous-pixels compris dans chaque pixel.

**Patentansprüche**

1. Anzeigebildschirm (E). welcher eine Matrix von Pixeln (P) umfasst, die in Reihen und Spalten senkrecht zu den Reihen angeordnet sind, worin jedes Pixel drei oder mehr Unterpixel (SP) mit unterschiedlichen Farben (RGB) umfasst, die in der Richtung der Reihen ausgerichtet sind und eine längliche Form aufweisen, worin jedes Unterpixel mit einer Hauptabmessung relativ zur Richtung der Spalten einen gleichen Winkel $\alpha$ ungleich Null bildet, worin die kurzen oberen und unteren Enden jedes Unterpixels einer Reihe L, außer denjenigen in der ersten und der letzten Reihe, entsprechend kurzen unteren und oberen Enden von zu den Reihen L-1 und L+1 gehörenden und andere Farben darstellenden Subpixeln mit einem Versatz entlang der Richtung der kurzen Enden zwischen einander zugewandten kurzen Enden von Subpixeln mit unterschiedlichen Farben zugewandt sind; worin der Bildschirm mit einer Winkelauswahl-Anordnung zur autostereoskopischen Anzeige angepasst ist, deren Hauptachsen relativ zur Richtung der Spalten und mit einem Abstand einen Winkel $\alpha$ bilden, der es ermöglicht, M $\geq$ 2 Unterpixel abzudecken, was der Anzahl der vom Bildschirm angezeigten Sichtpunkte entspricht.

2. Anzeigebildschirm nach Anspruch 1, worin jedes Unterpixel von vier Unterpixeln, zwei in Richtung der Hauptdimension und zwei in einer senkrechten Richtung, umgeben ist, worin die umgebenden Unterpixel Farben aufweisen, die sich von der Farbe des Unterpixels unterscheiden.

3. Anzeigebildschirm nach Anspruch 1, worin jedes Unterpixel in einem Parallelogramm mit kurzen Seiten umfasst ist, die in Richtung der Reihen ausgerichtet sind.

4. Anzeigebildschirm nach einem der Ansprüche 2 oder 3, worin jedes Unterpixel in ein Rechteck mit kurzen Seiten umfasst ist, die relativ zur Richtung der Reihen einen Winkel $\alpha$ bilden.

5. Anzeigebildschirm nach einem der vorstehenden Ansprüche, worin die Baryzentren (BC) der Unterpixel einer Farbe, die zu verschiedenen Reihen gehören, in Richtung der Spalten ausgerichtet sind.

6. Anzeigebildschirm nach einem der vorstehenden Ansprüche, worin die verschiedenen Unterpixel durch schwarze Zwischenräume getrennt sind.

7. Anzeigebildschirm nach einem der vorstehenden Ansprüche, worin der Winkel durch die Gleichung angegeben wird:

$$\alpha = (1+\varepsilon)\tan^{-1}(1/N)$$

wobei $\varepsilon$ ein Parameter in dem Bereich von -0,1 bis +0,1 ist, und N die Anzahl der in jedem Pixel enthaltenen Unterpixel ist.

**Claims**

1. A display screen (E) comprising a matrix of pixels (P) arranged in rows and columns perpendicular to said rows, each pixel comprising three or more sub-pixels (SP) of different colors (RGB), in alignment in the direction of said rows and presenting a shape that is elongate, each sub-pixel presenting a main dimension forming a same non-zero angle $\alpha$ relative to the direction of said columns, the short top and bottom ends of each sub-pixel of a row L, with the exception of those in the first and the last rows, faces respectively, short bottom and top ends of sub-pixels belonging to rows L-1 and L+1 and presenting other colors, with an offset along the direction of short ends between short ends of sub-pixels facing each other of different colors; the screen being fitted with an angle selection array for autostereoscopic display having main axes forming an angle $\alpha$ relative to the direction of said columns and at a pitch that enables $M \geq 2$ sub-pixels to be covered, equal to the number of viewpoints displayed by the screen.

2. A display screen according to claim 1, wherein each sub-pixel is surrounded by four sub-pixels, two in the direction of said main dimension and two in a perpendicular direction, the surrounding sub-pixels being of colors different from the color of said sub-pixel.

3. A display screen according to claim 1, wherein each said sub-pixel is inscribed within a parallelogram having short sides oriented in the direction of said rows.

4. A display screen according to any one of claims 2 or 3, wherein each sub-pixel is inscribed within a rectangle having short sides forming an angle $\alpha$ relative to the direction of said rows.

5. A display screen according to former, wherein the barycenters (BC) of the sub-pixels of any one color belonging to different rows are in alignment in the direction of said columns.

6. A display screen according to any one of former claims, wherein the different sub-pixels are separated by black spaces.

7. A display screen according to any one of former claims, wherein said angle $\alpha$ is given by the equation:

$$\alpha = (1+\varepsilon)\tan^{-1}(1/N)$$

where $\varepsilon$ is a parameter lying in the range -0.1 to +0.1, and N is the number of sub-pixels included in each pixel.

*Fig. 1*

*Fig. 2*

Fig. 3a

Fig. 3b

*Fig. 4a*

*Fig. 4b*

Fig. 4c

Fig. 4d

Fig. 4e

*Fig. 5a*

*Fig. 5b*

Fig. 5c

Fig. 6

Fig. 7a

Fig. 7b

Fig. 7c

Fig. 7d

*Fig. 7e*

**EP 2 895 914 B1**

## RÉFÉRENCES CITÉES DANS LA DESCRIPTION

**Documents brevets cités dans la description**

- EP 1779181 A
- US 2011141560 A
- US 20080316379 A
- WO 2009057020 A